# EUROPÄISCHE PATENTSCHRIFT

(11) **EP 1 173 107 B1**
(45) Veröffentlichungstag und Bekanntmachung des Hinweises auf die Patenterteilung: **08.04.2009**
(21) Anmeldenummer: 01913719.9
(22) Anmeldetag: 27.02.2001
(51) Int. Cl.: A61C 7/00, A61C 7/10

(54) **KIEFERORTHOPÄDISCHE VORRICHTUNG**
JAW ORTHOPEDIC DEVICE
DISPOSITIF D'ORTHOPEDIE MAXILLAIRE

(30) Priorität: 29.02.2000 DE 20003634 U
(43) Veröffentlichungstag der Anmeldung: 23.01.2002
(73) Patentinhaber: Bredent Dentalgeräte und Materialien Fach- und Organisationsberatung Peter Brehm, 89250 Senden (DE)
(72) Erfinder: PAULUS, Werner, 91593 Burgbernheim (DE)
(74) Vertreter: Dziewior, Joachim
(86) Internationale Anmeldenummer: PCT/DE2001/000724
(87) Internationale Veröffentlichungsnummer: WO 2001/064126

(56) Entgegenhaltungen:
- DE-A- 4 020 647
- FR-A- 1 456 601
- US-A- 4 054 996
- US-A- 5 328 362
- US-A- 5 755 233

## Beschreibung

Die Erfindung betrifft eine kieferorthopädische Vorrichtung zur Bewegung und/oder Einordnung von Zähnen mit den Merkmalen des Oberbegriffs von Patentanspruch 1.

Als Stand der Technik sind hierzu - umgangssprachlich auch Zahnregulierung genannt - kieferorthopädische Geräte bekannt, die neben Hartkunststoffmaterialien und Drahtelementen Federn oder Schrauben zur Zahnkontaktierung aufweisen. Eine Zahnbewegung ist durch derartige Federn oder Schrauben nur eingeschränkt möglich. Die Angriffspunkte der Federn oder Schrauben wirken nur punktuell und die jeweiligen wirkenden Kräfte können nur eingeschränkt kontrolliert werden. Ferner werden derartige kieferorthopädische Geräte mit Federn oder Schrauben aufgrund ihrer voluminösen Bauweise im Mundraum vom Benutzer als unangenehm empfunden.

FR 1456601 offenbart eine kieferorthopädische Vorrichtung mit einem Hartkunststoffelement und einem Weichkunststoffelement zur nachgiebigen Zahnkontaktierung. Zwei Schrauben sind mit einem Drahtelement verbunden, das in das Weichkunststoffelement eingebettet ist.

Der Erfindung liegt die Aufgabe zugrunde, eine kieferorthopädische Vorrichtung zur Bewegung oder Einordnung von Zähnen anzubieten, welche z.B. verbesserte Möglichkeiten bei der Zahnbewegung bietet.

Die Aufgabe wird durch die Merkmale des Patentanspruchs 1 gelöst. Vorteilhafte Ausführungsformen der Erfindung werden in den Patentansprüchen 2 bis 18 beschrieben.

Über das in das Kunststoffelement der erfindungsgemäßen kieferorthopädischen Vorrichtung integrierte und dauerhaft angebrachte Weichkunststoffelement ergeben sich im Vergleich zum Stand der Technik neue Möglichkeiten der Zahnkontaktierung und Zahnbewegung. Im Gegensatz zu üblichen kieferorthopädischen Geräten mit Federn oder Schrauben erlauben integrierte Weichkunststoffelemente eine nachgiebige Kontaktierung des jeweiligen Zahnes oder mehrerer Zähne, wodurch die wirkenden Kräfte gleichmäßig und damit schonender in den Zahn eingeleitet werden können.

Dabei kann das Kunststoffelement aus verschiedenartigen Hartkunststoffmaterialien, z.B. aus Methylmethacrylat oder Polymethylmethacrylat bestehen, welche an sich aus herkömmlichen kieferorthopädischen Geräten bekannt sind.

Das Weichkunststoffelement kann insbesondere aus Silikonmaterial, z.B. aus Vinylpolysiloxan, bestehen.

Insgesamt ermöglicht es die erfindungsgemäße kieferorthopädische Vorrichtung, Bereiche des Kunststoffelements mit herkömmlichem Hartkunststoffmaterial auszustatten, wenn eine Führung und Verankerung der kieferorthopädischen Vorrichtung gewünscht wird. In denjenigen Bereichen des Zahnbogens, in denen einzelne oder mehrere Zähne bewegt und neu positioniert werden sollen, können integrierte und dauerhaft mit dem Hartkunststoffmaterial verbundene (z.B. vernetzte oder verklebte) Weichkunststoffelemente verwendet werden, so daß das Kunststoffelement als 2-Komponenten- oder Mehrkomponententeil ausgebildet ist.

Durch Weichkunststoffelemente können Zahnbewegungen erreicht werden, die gezielt steuerbar sind und eine Vielzahl von Veränderungen, wie z.B. Intrusion, Extrusion oder Drehungen ermöglichen. Insbesondere besteht vor allem im Frontzahnbereich auch die Möglichkeit, daß das Weichkunststoffelement den Zahn übergreift und hierbei eine Zugbeanspruchung auf den Zahn überträgt.

Dabei kann das Weichkunststoffelement auch in Bereichen eingesetzt werden, in denen keine Zahnbewegung, sondern nur eine besonders komfortable Führung oder Verankerung der kieferorthopädischen Vorrichtung erreicht werden soll.

Insbesondere zur Intrusion oder Extrusion eines Zahnes kann das Weichkunststoffelement auf ein an dem jeweiligen Zahn angebrachtes Zusatzelement einwirken. Ergänzend oder alternativ kann ein flächiger Kontakt des Weichkunststoffelements mit dem Zahn hergestellt werden, um die auftretenden Kräfte großflächig in den Zahn einzuleiten.

Ergänzend können bei der erfindungsgemäßen kieferorthopädischen Vorrichtung auch herkömmliche Federn oder Schrauben vorgesehen sein, welche entweder auf herkömmliche Weise direkt (unmittelbar) auf den Zahn wirken oder mittelbar den Zahn beaufschlagen, indem die Feder oder die Schraube zunächst auf das Weichkunststoffelement wirken, welches den eingeleiteten Druck auf den Zahn oder die Zähne weitergibt.

Gemäß einer weiteren vorteilhaften Ausführungsform kann die erfindungsgemäße kieferorthopädische Vorrichtung auch bereichsweise Kunststoffelemente aus unterschiedlichen Hartkunststoffmaterialien aufweisen.

Um z.B. in unterschiedlichen Bereichen des Zahnbogens gewünschte Druckverläufe oder Druckkräfte einbringen zu können, können auch bereichsweise integrierte Weichkunststoffelemente aus unterschiedlichen Materialien, unterschiedlicher Dicke und/oder Dimensionierung angebracht werden.

Gemäß einer weiteren Ausführungsform kann mindestens ein Drahtelement der erfindungsgemäßen kieferorthopädischen Vorrichtung nachgiebig an oder in einem Weichkunststoffelement angebracht sein. Dabei kann das Drahtelement in einem anderen Endbereich auch an einem Kunststoffelement angebracht sein.

Insgesamt sind durch alternative Verankerungspunkte des Drahtelements am Kunststoff- bzw. Weichkunststoffelement gewünschte Belastungskräfte für den Zahnbogen genau dosier- und steuerbar.

Die Figuren zeigen :
- Fig. 1: eine schematische Darstellung eines Kiefers mit eingesetzter kieferorthopädischer Vorrichtung vor der gewünschten Zahnbewegung,
- Fig. 2: eine Darstellung eines Kiefers mit eingesetzter kieferorthopädischer Vorrichtung nach der gewünschten Zahnbewegung sowie
- Fig. 3: einen Schnitt A-A nach Fig. 1.

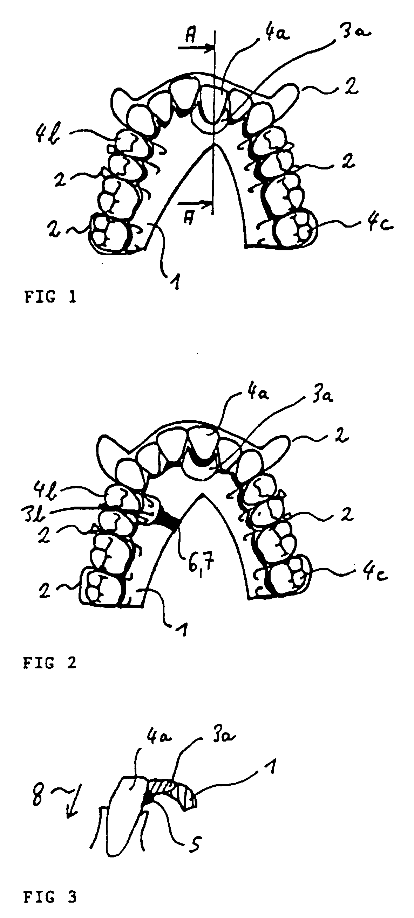

Aus Fig. 1 geht eine schematische Kieferdarstellung (Zahnbogen) hervor mit einem Zahn 4, der beispielhaft versetzt angeordnet und in den Zahnbogen durch Verwendung der kieferorthopädischen Vorrichtung (z. B. als Zahnspange) wieder eingereiht werden soll. Die kieferorthopädische Vorrichtung besitzt ein herausnehmbares Kunststoffelement 1 mit Drahtelementen 2, welches Zähne 4 zur Führung und Verankerung umgreifen bzw. durchgreifen.

Im Bereich des Zahns 4a ist in das Kunststoffelement 1 mit dauerhafter Verbindung ein Weichkunststoffelement 3a integriert, welches den Zahn 4a kontaktiert, um diesen nach dauerhaftem Tragen der kieferorthopädischen Vorrichtung in die nach außen verschobene Position nach Fig. 2 zu bewegen.

Fig. 2 zeigt eine kieferorthopädische Vorrichtung mit einem Kunststoffelement 1 und einem ersten Weichkunststoffelement 3a, welches den Zahn 4a beaufschlagt sowie einem weiteren Weichkunststoffelement 3b, welches den Zahn 4b beaufschlagt. Dabei ist hinter dem Weichkunststoffelement 3b eine schematisch dargestellte Feder 6 oder Schraube 7 angebracht, welche über das Weichkunststoffelement 3b auf den Zahn 4b wirkt. Durch Zwischenschaltung des Weichkunststoffelements 3b kann der Druck der Feder 6 oder Schraube 7 auf den Zahn 4b gedämpft und dosiert werden.

Gemäß der Schnittdarstellung nach Fig. 3 wirkt das Weichkunststoffelement 3a, welches dauerhaft mit dem Kunststoffelement 1 verbunden ist, über das alternativ vorhandene und am Zahn 4a angebrachte Zusatzelement 5 auf den Zahn 4a, wodurch dieser im Wege der Intrusion in Richtung 8 druckbeaufschlagt wird. Im Falle einer Extrusion könnte das Weichkunststoffelement 3 unterhalb des Zusatzelements 5 angreifen, ferner kann das Weichkunststoffelement 3 das Zusatzelement 5 auch z.B. zur Ausführung von Drehungen umgreifen (jeweils nicht abgebildet).

Insgesamt kann die erfindungsgemäße kieferorthopädische Vorrichtung detailliert und bereichsweise konfiguriert werden, so daß für jeden einzelnen Zahn 4 eines Zahnbogens festgelegt werden kann, ob ein Bereich aus Hartkunststoffmaterial oder ein integriertes Weichkunststoffelement 3 mit oder ohne Hinterspannung durch eine Feder 6 oder eine Schraube 7 gewählt wird.

## Patentansprüche

1. Kieferorthopädische Vorrichtung zur Bewegung und/oder Einordnung von Zähnen in den Zahnbogen, mit einem Kunststoffelement (1) und mindestens einem Drahtelement zur Zahnkontaktierung oder Zahnbewegung, wobei das Kunststoffelement aus einem Hartkunststoffmaterial besteht und mindestens ein integriertes Weichkunststoffelement (3) zur Zahnbewegung aufweist, wobei das Weichkunststoffelement (3) an die Kontur mindestens eines Zahnes (4) angepaßt ist und zur nachgiebigen Zahnkontaktierung vorgesehen ist, und wobei hinter dem Weichkunststoffelement (3) zur mittelbaren Beaufschlagung des Zahnes/der Zähne (4) wenigstens eine das Weichkunststoffelement unmittelbar kontaktierende Schraube (7) vorgesehen ist, deren Druck durch Zwischenschaltung des Weichkunststoffelements gegen den Zahn/die Zähne (4) dämpfbar und dosierbar ist.

2. Kieferorthopädische Vorrichtung nach Anspruch 1, **dadurch gekennzeichnet, daß** das Hartkunststoffmaterial für das Kunststoffelement (1) aus Methylmethacrylat oder Polymethylmethacrylat besteht.

3. Kieferorthopädische Vorrichtung nach Anspruch 1 oder 2, **dadurch gekennzeichnet, daß** das Weichkunststoffelement (3) aus Silikonmaterial, z.B. aus Vinylpolysiloxan, besteht.

4. Kieferorthopädische Vorrichtung nach einem der Ansprüche 1 bis 3, **dadurch gekennzeichnet, daß** das Weichkunststoffelement (3)geeignet ist, ein an mindestens einem Zahn (4) angebrachtes Zusatzelement (5) zur Extrusion, Intrusion oder Verdrehung des Zahnes (4) zu kontaktieren.

5. Kieferorthopädische Vorrichtung nach einem der Ansprüche 1 bis 4, **dadurch gekennzeichnet, daß** das Weichkunststoffelement (3) geeignet ist, mindestens einen Zahn (4) flächig zu kontaktieren.

6. Kieferorthopädische Vorrichtung nach einem der Ansprüche 1 bis 5, **dadurch gekennzeichnet, daß** das Weichkunststoffelement (3) zur Positionierung mindestens eines Zahnes (4) dient.

7. Kieferorthopädische Vorrichtung nach einem der Ansprüche 1 bis 6, **dadurch gekennzeichnet, daß** das Kunststoffelement (1) zur Führung oder Verankerung der kieferorthopädischen Vorrichtung im Zahnbogen dient.

8. Kieferorthopädische Vorrichtung nach einem der Ansprüche 1 bis 7, **dadurch gekennzeichnet, daß** mindestens eine Feder (6) zur Zahnkontaktierung vorgesehen ist.

9. Kieferorthopädische Vorrichtung nach einem der Ansprüche 1 bis 8, **dadurch gekennzeichnet, daß** mindestens eine Schraube zur direkten Zahnkontaktierung vorgesehen ist.

10. Kieferorthopädische Vorrichtung nach Anspruch 8 **dadurch gekennzeichnet, daß** die Feder (6) geeignet ist, mindestens einen Zahn (4) direkt zu kontaktieren.

11. Kieferorthopdische Vorrichtung nach einem der Ansprüche 8 oder 10, **dadurch gekennzeichnet, daß** die Feder (6) geeignet ist, mindestens einen Zahn (4) mittelbar über das Weichkunststoffelement (3) zu kontaktieren.

12. Kieferorthopädische Vorrichtung nach einem der Ansprüche 1 bis 11, **dadurch gekennzeichnet, daß** das Kunststoffelement (1) der kieferorthopädischen Vorrichtung bereichsweise aus unterschiedlichen Hartkunststoffmaterialien besteht.

13. Kieferorthopädische Vorrichtung nach einem der Ansprüche 1 bis 12, **dadurch gekennzeichnet, daß** mehrere Weichkunststoffelemente (3) aus unterschiedlichen Materialien vorgesehen sind.

14. Kieferorthopädische Vorrichtung nach einem der Ansprüche 1 bis 13, **dadurch gekennzeichnet, daß** mindestens ein Drahtelement (2) im oder am Weichkunststoffelement (3) angebracht ist.

15. Kieferorthopädische Vorrichtung nach einem der Ansprüche 1 bis 14, **dadurch gekennzeichnet, daß** mindestens ein Drahtelement (2) einerseits am Kunststoffelement (1) und andererseits am Weichkunststoffelement (3) angebracht ist.

## Claims

1. A jaw orthopaedic device for the movement and/or ordering of teeth in the dental arch, comprising a plastic material element (1) and at least one wire element for tooth contacting or tooth movement, wherein the plastic material element comprises a hard plastic material and has at least one integrated soft plastic material element (3) for tooth movement, wherein the soft plastic material element (3) is matched to the contour of at least one tooth (4) and is provided for flexible tooth contacting, and wherein provided behind the soft plastic material element (3) for indirectly acting on the tooth/teeth (4) is at least one screw (7) which directly contacts the soft plastic material element and the pressure of which can be damped and metered by interposition of the soft plastic material element against the tooth/teeth (4).

2. A jaw orthopaedic device according to claim 1 **characterised in that** the hard plastic material for the plastic material element (1) comprises methylmethacrylate or polymethylmethacrylate.

3. A jaw orthopaedic device according to claim 1 or claim 2 **characterised in that** the soft plastic material element (3) comprises silicone material, for example vinylpolysiloxane.

4. A jaw orthopaedic device according to one of claims 1 to 3 **characterised in that** the soft plastic material element (3) is suitable for contacting an additional element (5) fitted to at least one tooth (4) for extrusion, intrusion or rotation of the tooth (4).

5. A jaw orthopaedic device according to one of claims 1 to 4 **characterised in that** the soft plastic material element (3) is suitable for contacting at least one tooth (4) in surface relationship therewith.

6. A jaw orthopaedic device according to one of claims 1 to 5 **characterised in that** the soft plastic material element (3) serves for positioning at least one tooth (4).

7. A jaw orthopaedic device according to one of claims 1 to 6 **characterised in that** the plastic material element (1) serves for guiding or anchoring the jaw orthopaedic device in the dental arch.

8. A jaw orthopaedic device according to one of claims 1 to 7 **characterised in that** there is provided at least one spring (6) for tooth contacting.

9. A jaw orthopaedic device according to one of claims 1 to 8 **characterised in that** there is provided at least one screw for direct tooth contacting.

10. A jaw orthopaedic device according to claim 8 **characterised in that** the spring (6) is suitable for directly contacting at least one tooth (4).

11. A jaw orthopaedic device according to one of claims 8 and 10 **characterised in that** the spring (6) is suitable for contacting at least one tooth (4) indirectly by way of the soft plastic material element (3).

12. A jaw orthopaedic device according to one of claims 1 to 11 **characterised in that** the plastic material element (1) of the jaw orthopaedic device comprises region-wise different hard plastic materials.

13. A jaw orthopaedic device according to one of claims 1 to 12 **characterised in that** there are provided a plurality of soft plastic material elements (1) comprising different materials.

14. A jaw orthopaedic device according to one of claims 1 to 13 **characterised in that** at least one wire element (2) is fitted in or on the soft plastic material element (3).

15. A jaw orthopaedic device according to one of claims 1 to 14 **characterised in that** at least one wire element (2) is fitted on the one hand to the plastic material element (1) and on the other hand to the soft plastic material element (3).

## Revendications

1. Dispositif d'orthopédie maxillaire destiné à déplacer et/ou à intégrer des dents dans un maxillaire, et qui comporte
un élément en matière plastique (1) et au moins un élément en fil métallique pour être en contact avec les dents ou les déplacer, le premier élément étant en matière plastique dure et présentant pour le déplacement de la dent au moins un élément intégré en matière plastique souple (3) qui est adapté au contour d'au moins une dent (4) et qui est prévu pour assurer avec la dent un contact élastique,
derrière l'élément en matière plastique souple (3), pour actionner directement la ou les dents (4), au moins une vis (7) qui est en contact direct avec cet élément et dont la pression qu'elle exerce sur la ou les dents (4) peut être amortie ou dosée par interposition de l'élément en matière plastique souple.

2. Dispositif d'orthopédie selon la revendication 1, **caractérisé en ce que** la matière plastique dure pour l'élément (1) est un methylacrylate ou un polymethylacrylate.

3. Dispositif d'orthopédie selon la revendication 1 ou 2, **caractérisé en ce que** l'élément en matière plastique souple (3) est à base de silicone, il est en polysiloxane de vinyle par exemple.

4. Dispositif d'orthopédie selon une des revendications 1 à 3, **caractérisé en ce que** l'élément (3) en matière plastique souple est apte à assurer le contact avec un élément auxiliaire (5) qui est appliqué sur au moins une dent (5) afin d'assurer l'extrusion, l'intrusion ou la rotation de la dent (4).

5. Dispositif d'orthopédie selon une des revendications 1 à 4, **caractérisé en ce que** l'élément (3) en matière plastique souple est apte à assurer le contact à plat avec au moins une dent (4).

6. Dispositif d'orthopédie selon une des revendications 1 à 5, **caractérisé en ce que** l'élément (3) en matière plastique souple sert à positionner au moins une dent (4).

7. Dispositif d'orthopédie selon une des revendications 1 à 6, **caractérisé en ce que** l'élément (1) en matière plastique sert à guider ou à ancrer le dispositif d'orthopédie maxillaire dans le maxillaire.

8. Dispositif d'orthopédie selon une des revendications 1 à 7, **caractérisé en ce qu'**il est prévu au moins un ressort (6) pour assurer le contact avec la dent.

9. Dispositif d'orthopédie selon une des revendications 1 à 8, **caractérisé en ce qu'**il est prévu au moins une vis pour assurer le contact direct avec la dent.

10. Dispositif d'orthopédie selon la revendication 8, **caractérisé en ce que** le ressort (6) est apte à assurer un contact direct au moins avec une dent (4).

11. Dispositif d'orthopédie selon une des revendications 8 à 10, **caractérisé en ce que** le ressort (6) est apte à assurer un contact direct au moins avec une dent (4) par l'intermédiaire de l'élément (3) en matière plastique souple.

12. Dispositif d'orthopédie selon une des revendications 1 à 11, **caractérisé en ce que** l'élément (1) en matière plastique est constitué localement de différentes matières plastique dures.

13. Dispositif d'orthopédie selon une des revendications 1 à 12, **caractérisé en ce qu'**il est prévu plusieurs éléments (3) en matières plastiques souples différentes.

14. Dispositif d'orthopédie selon une des revendications 1 à 13, **caractérisé en ce qu'**au moins un élément en fil métallique (2) est monté dans ou sur l'élément (3) en matière plastique souple.

15. Dispositif d'orthopédie selon une des revendications 1 à 14, **caractérisé en ce qu'**au moins un élément en fil métallique (2) est prévu d'une part sur l'élément (1) en matière plastique et d'autre part sur l'élément (3) en matière plastique souple.
